# EUROPEAN PATENT APPLICATION

(11) **EP 4 626 102 A1**
(43) Date of publication of application: **01.10.2025**
(21) Application number: 22966146.7
(22) Date of filing: 23.11.2022
(51) Int. Cl.: H04W 72/04

(54) **COMMUNICATION METHOD, ELECTRONIC DEVICE, AND STORAGE MEDIUM**

(71) Applicant: Beijing Xiaomi Mobile Software Co., Ltd., Beijing 100085 (CN)
(72) Inventor: DONG, Xiandong, Beijing 100085 (CN)
(74) Representative: Dehns Germany Partnerschaft mbB
(86) International application number: PCT/CN2022/133844
(87) International publication number: WO 2024/108451

(57) **Abstract**

Embodiments of the present disclosure relate to the technical field of mobile communications, and provide a communication method, an electronic device, and a storage medium. The communication method is applied to an access point (AP) device, and comprises: sending a first radio frame, the first radio frame comprising uplink bandwidth information of a first sub physical layer protocol data unit (PPDU) of an uplink aggregated PPDU (A-PPDU) transmitted by a station device (STA), wherein when the STA comprises a first STA or a second STA, the uplink bandwidth for transmitting the first sub PPDU by the first STA or the second STA covers a main channel; the first STA is a high efficiency (HE)/enhancements for extremely high throughput (EHT) STA that does not support sub-channel selective transmission (SST); and the second STA is an HE/EHT STA that supports the SST. The embodiments of the present disclosure provides an implementation mode for transmitting an A-PPDU.

## Description

### TECHNICAL FIELD

Embodiments of the present disclosure relate to the field of mobile communication technologies, and in particular, to a communication method, an electronic device, and a storage medium.

### BACKGROUND

With the rapid development of mobile communication technologies, great progress has been made in terms of transmission rate, throughput, or the like, in wireless fidelity (Wi-Fi) technology. At present, the content studied in Wi-Fi technology, for example, ultra high reliability (UHR), aims to improve the reliability of wireless local area networks (WLAN) connectivity, reduce latencies, increase manageability, increase throughput at different signal to noise ratio (SNR) levels, and reduce device level power consumption. In addition, in UHR, in order to improve the throughput of the system, there is proposed a manner of simultaneously performing communication in frequency bands of sub7 GHz and 45 GHz and/or 60 GHz.

In order to improve the throughput of the system, a large bandwidth communication, such as 320 MHz or 640 MHz communication, may be supported on an access point (AP) device side; however, a small bandwidth communication, such as 160 MHz or 80 MHz communication may only be supported by a station (STA). An STA usually only supports a small bandwidth, such as 160 MHz or 80 MHz. In this case, in order to more fully utilize the capability of the AP, an aggregated physical layer protocol data unit (A-PPDU) may be transmitted. Therefore, there is a need to provide an implementation of transmitting the A-PPDU, so as to support UHR.

### SUMMARY

According to embodiments of the present disclosure, there is provided a communication method, an electronic device, and a storage medium, to provide an implementation of transmitting the A-PPDU.

In an aspect, according to embodiments of the present disclosure, there is provided a communication method, applied to an access point (AP) device, and the method includes:
sending a first radio frame, where the first radio frame includes uplink bandwidth information for transmitting a first sub-PPDU of an uplink aggregated physical layer protocol data unit (A-PPDU) by a station (STA);
where, in a case that the STA includes a first STA or a second STA, an uplink bandwidth for transmitting the first sub-PPDU by the first STA or the second STA includes a primary channel, the first STA is a high efficiency (HE)/enhancements for extremely high throughput (EHT) STA that does not support a subchannel selective transmission (SST), and the second STA is an HE/EHT STA that supports the SST.

In another aspect, according to embodiments of the present disclosure, there is further provided a communication method, applied to a station (STA), and the method includes:
receiving a first radio frame, where the first radio frame includes uplink bandwidth information for transmitting a first sub-PPDU of an uplink aggregated physical layer protocol data unit (A-PPDU) by the STA;
where, in a case that the STA includes a first STA or a second STA, an uplink bandwidth for transmitting the first sub-PPDU by the first STA or the second STA includes a primary channel, the first STA is a high efficiency (HE)/enhancements for extremely high throughput (EHT) STA that does not support a subchannel selective transmission (SST), and the second STA is an HE/EHT STA that supports the SST.

In another aspect, according to embodiments of the present disclosure, there is further provided an electronic device, where the electronic device is an access point (AP) device, and the electronic device includes:
a sending module, configured to send a first radio frame, where the first radio frame includes uplink bandwidth information for transmitting a first sub-PPDU of an uplink aggregated physical layer protocol data unit (A-PPDU) by a station (STA);
where, in a case that the STA includes a first STA or a second STA, an uplink bandwidth for transmitting the first sub-PPDU by the first STA or the second STA includes a primary channel, the first STA is a high efficiency (HE)/enhancements for extremely high throughput (EHT) STA that does not support a subchannel selective transmission (SST), and the second STA is an HE/EHT STA that supports the SST.

In another aspect, according to embodiments of the present disclosure, there is further provided an electronic device, where the electronic device is a station (STA), and the electronic device includes:
a receiving module, configured to receive a first radio frame, where the first radio frame includes uplink bandwidth information for transmitting a first sub-PPDU of an uplink aggregated physical layer protocol data unit (A-PPDU) by the STA;
where, in a case that the STA includes a first STA or a second STA, an uplink bandwidth for transmitting the first sub-PPDU by the first STA or the second STA includes a primary channel, the first STA is a high efficiency (HE)/enhancements for extremely high throughput (EHT) STA that does not support a subchannel selective transmission (SST), and the second STA is an HE/EHT STA that supports the SST.

According to embodiments of the present disclosure, there is further provided an electronic device, including a memory, a processor, and a computer program stored in the memory and executable on the processor, where when the program is executed by the processor, the method according to one or more of the embodiments of the present disclosure is implemented.

According to embodiments of the present disclosure, there is further provided a computer-readable storage medium, where a computer program is stored on the computer-readable storage medium, and when the computer program is executed by a processor, the method according to one or more of the embodiments of the present disclosure is implemented.

In the embodiments of the present disclosure, an AP sends a first radio frame, and the first radio frame includes uplink bandwidth information for transmitting a first sub-PPDU of the uplink A-PPDU by a station (STA), where, in a case that the STA includes a first STA or a second STA, the uplink bandwidth for transmitting the first sub-PPDU by the first STA or the second STA includes a primary channel. In other words, in UHR transmission, the primary channel is preferentially allocated to the first STA (if the first STA does not exist, the primary channel is preferentially allocated to the second STA), and the secondary channel is allocated to the UHR STA. Subsequently, different transmission protocols are configured for different channels, and the receiving device parses the sub-PPDU transmitted by each sub-channel according to different transmission protocols, to ensure backward compatibility and standardize the process of transmitting the uplink A-PPDU by the STAs supporting different protocols, so that the process is applicable to the UHR requirement.

Additional aspects and advantages of the embodiments of the present disclosure will be partially given in the following description, which will become apparent from the following description, or be learned by the practice of the present disclosure.

### BRIEF DESCRIPTION OF THE DRAWINGS

In order to more clearly illustrate the technical solutions of the embodiments of the present disclosure, the accompanying drawings that need to be used in the description of the embodiments of the present disclosure will be briefly described below. Obviously, the drawings in the following description are merely some embodiments of the present disclosure. For those of ordinary skill in the art, other drawings may be obtained according to these drawings without creative efforts.
FIG. 1 is a first flowchart of a communication method provided according to an embodiment of the present disclosure;
FIG. 2 is a first schematic diagram of a first example according to an embodiment of the present disclosure;
FIG. 3 is a second schematic diagram of a first example according to an embodiment of the present disclosure;
FIG. 4 is a second flowchart of a communication method provided according to an embodiment of the present disclosure;
FIG. 5 is a first schematic structural diagram of an electronic device provided according to an embodiment of the present disclosure;
FIG. 6 is a second schematic structural diagram of an electronic device provided according to an embodiment of the present disclosure;
FIG. 7 is a third schematic structural diagram of an electronic device provided according to an embodiment of the present disclosure.

### DETAILED DESCRIPTION

Example embodiments will now be described in detail, examples of which are illustrated in the accompanying drawings. The following description refers to the accompanying drawings in which the same numbers in different drawings represent the same or similar elements unless otherwise represented. The implementations described in the following example embodiments do not represent all implementations consistent with the present disclosure. By contrast, they are merely examples of apparatuses and methods consistent with some aspects of the present invention as detailed in the appended claims.

In the embodiments of the present disclosure, the terms used here are only for the purpose of describing particular embodiments, and are not intended to limit the present disclosure. As used in the present disclosure and the appended claims, the singular forms "a", "said", and "the" are intended to include the plural forms as well, unless the context clearly indicates other meanings. It should also be understood that the term "and/or" as used here refers to and includes any or all possible combinations of one or more associated listed items. For example, A and/or B may indicate three situations that A exists alone, A and B exist at the same time, and B exists alone. The character "/" generally indicates an "or" relationship between the associated objects. The term "a plurality of" means two or more, and in view of this, "a plurality of" may also be understood as "at least two" in the embodiments of the present disclosure.

It should be understood that although the terms "first", "second", "third", or the like may be used in the present disclosure to describe various information, these information should not be limited to these terms. These terms are only used to distinguish the same type of information from each other. For example, without departing from the scope of the present disclosure, the first information may also be referred to as second information, and similarly, the second information may also be referred to as first information. Depending on the context, for example, the word "if" used here may be interpreted as "at the time" or "when" or "in response to determining".

The technical solutions in the embodiments of the present disclosure will be clearly and completely described below with reference to the accompanying drawings in the embodiments of the present disclosure. Obviously, the described embodiments are only a part of the embodiments of the present disclosure, and not all embodiments. All other embodiments obtained by those of ordinary skill in the art based on the embodiments of the present disclosure without creative efforts shall fall within the protection scope of the present disclosure.

According to embodiments of the present disclosure, there is provided a communication method, an electronic device, and a storage medium, to provide an implementation of transmitting the A-PPDU.

Among them, the method and the apparatus are based on the same application concept. Since the principles of solving the problems by using the method and the apparatus are similar, the implementations of the apparatus and the method may refer to each other, and the repetitive parts are not described again.

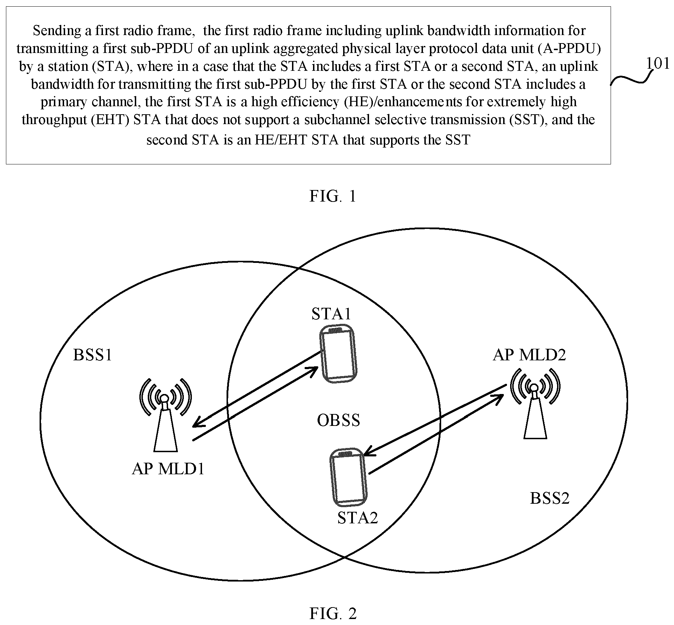

As shown in FIG. 1, according to embodiments of the present disclosure, there is provided a communication method. Optionally, the method may be applied to an access point (AP) device. Optionally, in the embodiments of the present disclosure, the AP is, for example, a device having a wireless to wired bridging function, and the AP is responsible for extending a service provided by the wired network to a wireless network. A station (STA) is, for example, an electronic device having a wireless network access function, and provides a frame delivery service to deliver information.

The method may include the following step.

In step 101, a first radio frame is sent, where the first radio frame includes uplink bandwidth information for transmitting a first sub-PPDU of an uplink aggregated physical layer protocol data unit (A-PPDU) by a station (STA).

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support a subchannel selective transmission (SST), and the second STA is an HE/EHT STA that supports the SST.

In a wireless local area network, a basic service set (BSS) may consist of an AP and one or more stations (STAs) in communication with the AP. A basic service set may be connected to a distribution system (DS) through its AP, and then may access to another basic service set to form an extended service set (ESS).

Optionally, in the embodiments of the present disclosure, the AP and the STA may be devices that support multi-connectivity. For example, the AP and the STA may be represented as an AP MLD and a non-AP MLD, respectively. For ease of description, in the following, an example in which an AP communicates with an STA under multi-connectivity is mainly described, however, example embodiments of the present disclosure are not limited to this.

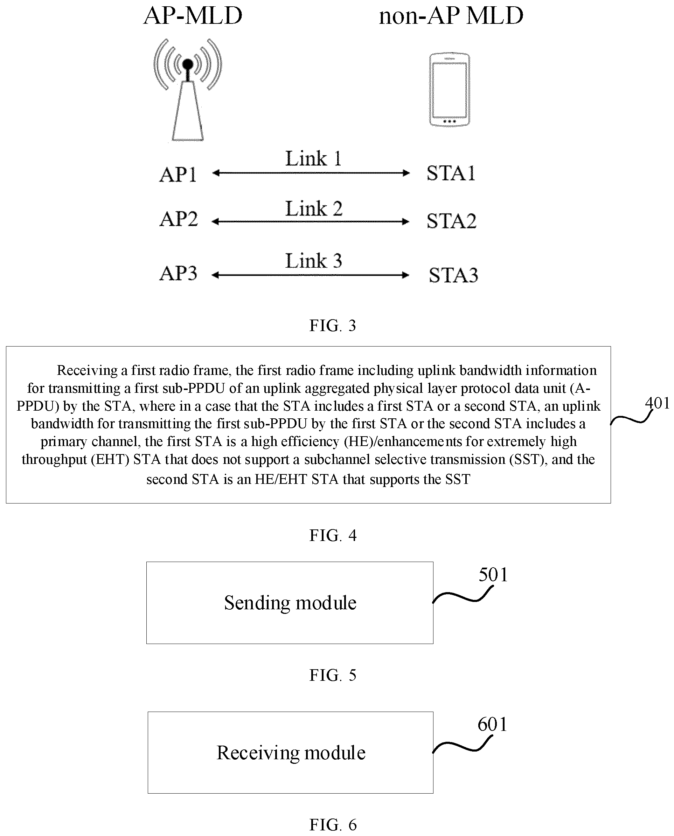

As a first example, referring to FIG. 2 and FIG. 3, the AP MLD may represent an access point supporting a multi-connectivity communication function, and the non-AP MLD may represent a station supporting the multi-connectivity communication function. In FIG. 3, AP1 and STA1 constitute BSS1, and AP2 and STA2 constitute BSS2.

Referring to FIG. 2, the AP MLD may include three affiliated APs, such as AP1, AP2, and AP3 shown in FIG. 2. Each AP may operate in connectivity 1, connectivity 2, and connectivity 3, respectively. The non-AP MLD may also include three affiliated STAs, such as STA1, STA2, and STA3 shown in FIG. 2. STA1 works in connectivity 1, STA2 operates in connectivity 2, and STA3 operates in connectivity 3. In the example of FIG. 2, it is assumed that, AP1 communicates with STA1 through a corresponding first connectivity Link1, similarly, AP2 communicates with STA2 through a corresponding second connectivity Link2, and AP communicates with STA3 through a third connectivity Link3. In addition, Link1 to Link3 may be multi-connectivity at different frequencies, for example, connectivity at 2.4 GHz, 5 GHz, and 6 GHz, or several connectivity with same or different bandwidths at 2.4 GHz. In addition, there may be multiple channels in each connectivity. It may be understood that the communication scenario shown in FIG. 2 is merely an example, and the concept of the present disclosure is not limited to this. For example, the AP MLD may be connected to multiple (three) non-AP MLDs; or, in each connectivity, the AP may communicate with multiple other types of stations.

Generally, the maximum operation bandwidth supported by the AP is different from the maximum operation bandwidth supported by the STA establishing an association connectivity with the AP. For example, a maximum operation bandwidth of 320 MHz or 640 MHz may be supported by the AP, while only a maximum operation bandwidth of 160 MHz or 80 MHz, or less, may be supported by an STA. In this case, in order to make use of the capability of the AP MLD to the maximum extent, and improve the throughput of the system, an A-PPDU may be transmitted. The A-PPDU refers to transmission of data frame in a large bandwidth. For example, in 320 MHz, PPDU transmissions are respectively performed for different STAs by respectively using bandwidths of 160 MHz, 80 MHz, and 80 MHz. The PPDU transmitted by each STA serves as a sub-PPDU of the A-PPDU, that is, the first sub-PPDU. Different STAs may each support different protocols. For example, there may be an STA supporting enhancements for extremely high throughput (EHT), hereinafter referred to as an EHT STA; or, there may be an STA supporting high efficiency (HE), hereinafter referred to as an HE STA. To implement that the STAs supporting different protocols are all able to transmit the A-PPDU to the UHR AP, in the embodiments of the present disclosure, the first radio frame carries the uplink bandwidth information for transmitting the first sub-PPDU of the uplink A-PPDU by the STA. The first STA is an HE/EHT STA that does not support a subchannel selective transmission (SST), and the second STA is an HE/EHT STA that supports the SST. It may be understood that, in the embodiments of the present disclosure, an HE/EHT STA includes an HE STA or an EHT STA.

Among them, in a case that the STA includes the first STA, the sub-PPDU configured to the first STA includes a primary channel; and a secondary channel is configured to other STAs, such as a UHR STA or a second STA.

Optionally, in a case that the STA includes the first STA or the second STA, the following scenarios may be specifically included.

In scenario (1), the STA that needs to be subjected to allocation of uplink bandwidth for sub-PPDU includes the first STA and the UHR STA. In this case, a primary channel is allocated to the first STA, and a secondary channel is allocated to the UHR STA.

In scenario (2), the STA that needs to be subjected to allocation of uplink bandwidth for sub-PPDU includes the first STA, the second STA, and the UHR STA. In this case, a primary channel is allocated to the first STA, and a secondary channel is allocated to the second STA and the UHR STA.

In scenario (3), the STA that needs to be subjected to allocation of uplink bandwidth for sub-PPDU includes the second STA and the UHR STA. In this case, a primary channel may be allocated to the second STA, and a secondary channel is allocated to the UHR STA; or, a secondary channel is allocated to the second STA, and a primary channel is allocated to the UHR STA.

In scenario (4), the STA that needs to be subjected to allocation of uplink bandwidth for sub-PPDU includes only one of the first STA and the second STA. When only the first STA is included, a primary channel is allocated to the STA. When only the second STA is included, a primary channel is allocated to the STA; alternatively, a secondary channel may be allocated to the STA.

In addition, there is further a scenario (5) in which the STA that needs to be subjected to allocation of uplink bandwidth for sub-PPDU includes only a UHR STA. In this case, a primary channel is allocated to the UHR STA; alternatively, a secondary channel may be allocated to the UHR STA.

Actually, when there is a UHR STA, the channel allocated to the UHR STAis a channel other than the channels (including the primary channel or the secondary channel) allocated to the first STA and/or the second STA.

For example, if the total channel bandwidth is 320 MHz, 80 MHz in the primary channel is allocated to the HE/EHT STA. The remaining includes a secondary channel of 80 MHz, and a secondary channel of 160 MHz, which are allocated to other STAs.

In a case that there is a second STA in the STA but there is no first STA in the STA, the AP may allocate the 80 MHz channel in the primary channel to the HE/EHT STA that supports the SST, i.e., the second STA.

In this way, in the UHR transmission, the primary channel is preferentially allocated to the first STA (if there is no first STA, the primary channel may also be preferentially allocated to the second STA), and the secondary channel may be allocated to the UHR STA. Subsequently, different transmission protocols are configured for different channels, and the receiving device parses the sub-PPDU transmitted by each sub-channel according to different transmission protocols, to ensure backward compatibility and standardize the process of transmitting the uplink A-PPDU by the STAs supporting different protocols, so that the process is applicable to the UHR requirement.

According to embodiments of the present disclosure, there is provided a communication method. Optionally, the method may be applied to an access point (AP) device.

The method may include the following steps.

In a process of establishing an individual target wake time (individual TWT), an uplink bandwidth is allocated to the STA for transmitting a sub-PPDU of the A-PPDU.

A first radio frame is sent, where the first radio frame includes uplink bandwidth information for transmitting a first sub-PPDU of an uplink aggregated physical layer protocol data unit (A-PPDU) by the station (STA).

Among them, in a case that the STA includes a first STA or a second STA, the uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

In the process of establishing the individual TWT with the STA, the AP negotiates the bandwidth for transmitting the A-PPDU by the STA. For example, if the maximum bandwidth supported by the AP is 320MHz, and the maximum bandwidth supported by the first STA is 80MHz (where the bandwidth capability supported by the STA may be obtained by parsing the HE/EHT capabilities information element), the bandwidth for transmitting the sub-PPDU of the A-PPDU by the STA is carried in the TWT response frame replied by the AP, for example, the bandwidth may be 80MHz of the primary channel.

Optionally, in the embodiments of the present disclosure, allocating, in the process of establishing the individual target wake time (individual TWT), the uplink bandwidth to the STA for transmitting the sub-PPDU of the A-PPDU includes at least one of the following.

In case 1, the STA includes the first STA, and a primary channel is allocated for the first sub-PPDU of the first STA.

In case 2, the STA includes the second STA and the UHR STA, a primary channel is allocated for the first sub-PPDU of the second STA, and a secondary channel is allocated to the UHR STA.

Alternatively, a secondary channel is allocated for the first sub-PPDU of the second STA, and a primary channel is allocated to the UHR STA.

In case 3, the STA only includes the UHR STA, and a primary channel or a secondary channel is allocated to the UHR STA.

In the case 1, in a case that the STA includes the first STA, the sub-PPDU configured to the first STA includes a primary channel. A secondary channel is configured to other STAs, such as a UHR STA or a second STA, for example, in the foregoing scenario (1) and scenario (2). For example, if the total channel bandwidth is 320 MHz, 80 MHz in the primary channel is allocated to the HE/EHT STA. The remaining includes a secondary channel of 80 MHz and a secondary channel of 160 MHz, which are allocated to other STAs. If there is a second STA in other STAs, reference may be made to the allocation manner in the following case 2.

When the STA includes only the first STA, a primary channel is allocated to the STA, and reference may be made to the foregoing scenario (4).

In case 2, in a case that there is a second STA in the STA but there is no first STA in the STA, for example, in the foregoing scenario (3), the AP may allocate a primary channel to the second STA, and allocate a secondary channel to the UHR STA; alternatively, the AP may allocate a secondary channel for the first sub-PPDU of the second STA, and allocate a primary channel to the UHR STA.

In the case 3, the STA includes only a UHR STA, for example, in the foregoing scenario (5), and a primary channel or a secondary channel is allocated to the UHR STA.

In addition, for a UHR STA, it needs to have capability information for supporting the A-PPDU, which is specifically a reception capability and a transmission capability. The AP may allocate, in the process of establishing the individual TWT, a primary channel or a secondary channel to the UHR STA for performing transmission of the sub-PPDU of the A-PPDU. Alternatively, the AP may carry an individual TWT parameter set field in the TWT response frame, and identify the primary channel and the secondary channel through the TWT channel sub-field in the individual TWT parameter set field.

As a second example, the format of the individual TWT parameter set field is shown in Table 1 below.

**TABLE 1**

| Information Content | Request Type | Target Wake Time | TWT Group Assignment | Nominal Minimum TWT Wake Duration | TWT Wake Interval Mantissa | TWT Channel | NDP Paging(optional) |
|---|---|---|---|---|---|---|---|
| Octets | 2 | 0 or 7 | 0, 3 or 2 | 1 | 2 | 1 | 0 or 4 |

Among them, the i-th bit in the TWT channel field indicates whether the channel corresponding to the i-th bit is a primary channel. For example, when the i-th bit is set to 1, it indicates that the channel corresponding to the i-th bit is a primary channel, and another channel that is set to 0 is a secondary channel.

Optionally, in the embodiments of the present disclosure, sending the first radio frame includes at least one of the following cases from case 4 to case 6.

In case 4, a trigger frame is sent in the bandwidth of the A-PPDU.

In case 5, a trigger frame is sent in the bandwidth of a basic service set (BSS).

In case 6, a CTS (Clear to send)-to-self frame is sent in the bandwidth of the A-PPDU.

Among them, the first radio frame includes the trigger frame and the CTS-to-self frame.

In the above case 4, the communication method provided according to the embodiments of the present disclosure includes the following steps.

The trigger frame is sent in the bandwidth of the A-PPDU, where the trigger frame is a multi-user physical layer protocol data unit (MU-PPDU), and a second sub-PPDU of the MU-PPDU includes the uplink bandwidth information for the STA corresponding to the second sub-PPDU.

Among them, in a case that the STA includes a first STA or a second STA, the uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST); and the second STA is an HE/EHT STA that supports the SST.

Among them, the AP sends the trigger frame in the bandwidth of the A-PPDU, where the format of the trigger frame is a MU-PPDU. The trigger frame includes the STA ID of each STA and the uplink bandwidth information (the UL BW value) for sending the sub-PPDU (the second sub-PPDU) corresponding to the STA ID. The bandwidth information, for example, the value negotiated by the AP in the process of establishing the individual TWT with the STA, may be different for each STA. In addition, the CS (Carrier Sensing) bit of the trigger frame is set to 0.

In the above case 5, the communication method provided according to the embodiments of the present disclosure includes the following steps.

The trigger frame is sent in the bandwidth of the BSS, where an uplink bandwidth (UL BW) sub-domain in a common information (Common Info) domain of the trigger frame is set to a maximum bandwidth supported by the first STA for parsing. The trigger frame includes uplink bandwidth information for transmitting the first sub-PPDU of the uplink aggregated physical layer protocol data unit (A-PPDU) by the station (STA).

The trigger frame further includes a user information (User Info) domain, and the User Info domain includes an association identifier (AID) of the STA and resource unit allocation (RU allocation) information.

Among them, in a case that the STA includes a first STA or a second STA, the uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

Among them, the AP sends the trigger frame in the bandwidth of the BSS, and the HE/EHT STA is able to parse the trigger frame. The AP sets the UL BW sub-domain in the Common Info domain of the trigger frame to the maximum bandwidth that the HE STA is able to parse, for example, 160 MHz. The Common Info domain further includes a User Info domain, and the User Info domain includes an association identifier (AID) and resource unit allocation (RU Allocation) information corresponding to the AID, where the RU Allocation information is, for example, the uplink bandwidth information for the first sub-PPDU negotiated by the AP in the process of establishing the individual TWT with the STA.

In the above case 6, the communication method provided according to the embodiments of the present disclosure includes the following steps.

The CTS-to-self frame is sent in the bandwidth of the A-PPDU. The CTS-to-self frame includes duration information for the A-PPDU. The UL BW sub-domain in the Common Info domain of the CTS-to-self frame is set to the maximum bandwidth supported by the first STA for parsing, for example, 160MHz. The CTS-to-self frame includes the uplink bandwidth information for transmitting the first sub-PPDU of the uplink aggregated physical layer protocol data unit (A-PPDU) by the STA, for example, the uplink bandwidth information for the first sub-PPDU negotiated by the AP in the process of establishing the individual TWT with the STA.

Among them, in a case that the STA includes a first STA or a second STA, the uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

In the embodiments of the present disclosure, the AP sends a first radio frame, where the first radio frame includes uplink bandwidth information for transmitting the first sub-PPDU of the uplink A-PPDU by the station (STA). In a case that the STA includes a first STA or a second STA, the uplink bandwidth for transmitting the first sub-PPDU by the first STA or the second STA includes a primary channel, that is, transmission is performed in the UHR. The primary channel is preferentially allocated to the first STA (if there is no first STA, the primary channel is preferentially allocated to the second STA), and a secondary channel is allocated to the UHR STA. Subsequently, different transmission protocols are configured for different channels, and the receiving device parses the sub-PPDU transmitted by each sub-channel according to different transmission protocols, to ensure backward compatibility and standardize the process of transmitting the uplink A-PPDU by the STAs supporting different protocols, so that the process is applicable to the UHR requirement.

Referring to FIG. 4, according to embodiments of the present disclosure, there is provided a communication method. Optionally, the method may be applied to an STA, and the method may include the following step.

In step 401, a first radio frame is received, where the first radio frame includes uplink bandwidth information for transmitting a first sub-PPDU of an uplink aggregated physical layer protocol data unit (A-PPDU) by the STA.

Among them, in a case that the STA includes a first STA or a second STA, the uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

Among them, for the WLAN architecture to which the communication method provided according to the embodiments of the present disclosure is applied, reference may be made to the foregoing first example, and details are not described here again.

Generally, the maximum operation bandwidth supported by the AP is different from the maximum operation bandwidth supported by the STA establishing an association connectivity with the AP. For example, a maximum operation bandwidth of 320 MHz or 640 MHz may be supported by the AP, while only a maximum operation bandwidth of 160 MHz or 80 MHz, or less, may be supported by an STA. In this case, in order to make use of the capability of the AP MLD to the maximum extent, and improve the throughput of the system, an A-PPDU may be transmitted. The A-PPDU refers to transmission of data frame in a large bandwidth. For example, in 320 MHz, PPDU transmissions are respectively performed for different STAs by respectively using bandwidths of 160 MHz, 80 MHz, and 80 MHz. The PPDU transmitted by each STA serves as a sub-PPDU of the A-PPDU, that is, the first sub-PPDU. Different STAs may each support different protocols. For example, there may be an STA supporting enhancements for extremely high throughput (EHT), hereinafter referred to as an EHT STA; or, there may be an STA supporting high efficiency (HE), hereinafter referred to as an HE STA. To implement that the STAs supporting different protocols are all able to transmit the A-PPDU to the UHR AP, in the embodiments of the present disclosure, the first radio frame carries the uplink bandwidth information for transmitting the first sub-PPDU of the uplink A-PPDU by the STA. The first STA is an HE/EHT STA that does not support the subchannel selective transmission (SST), and the second STA is an HE/EHT STA that supports the SST. The STA determines, according to whether the STA itself is the first STA, the second STA or the UHR STA, the channel allocated by the AP to the STA. It may be understood that, in the embodiments of the present disclosure, an HE/EHT STA includes an HE STA or an EHT STA.

Among them, in a case that the STA includes the first STA, the sub-PPDU configured by the AP to the first STA includes a primary channel; and a secondary channel is configured to other STAs, such as a UHR STA or a second STA.

Optionally, in a case that the STA includes the first STA or the second STA, the following scenarios may be specifically included.

In scenario (1), the STA that needs to be subjected to allocation of uplink bandwidth for sub-PPDU includes the first STA and the UHR STA. In this case, a primary channel is allocated to the first STA, and a secondary channel is allocated to the UHR STA.

In scenario (2), the STA that needs to be subjected to allocation of uplink bandwidth for sub-PPDU includes the first STA, the second STA, and the UHR STA. In this case, a primary channel is allocated to the first STA, and a secondary channel is allocated to the second STA and the UHR STA.

In scenario (3), the STA that needs to be subjected to allocation of uplink bandwidth for sub-PPDU includes the second STA and the UHR STA. In this case, a primary channel may be allocated to the second STA, and a secondary channel is allocated to the UHR STA; or, a secondary channel is allocated to the second STA, and a primary channel is allocated to the UHR STA.

In scenario (4), the STA that needs to be subjected to allocation of uplink bandwidth for sub-PPDU includes only one of the first STA and the second STA. When only the first STA is included, a primary channel is allocated to the STA. When only the second STA is included, a primary channel is allocated to the STA; alternatively, a secondary channel may be allocated to the STA.

In addition, there is further a scenario (5) in which the STA that needs to be subjected to allocation of uplink bandwidth for sub-PPDU includes only a UHR STA. In this case, a primary channel is allocated to the UHR STA; alternatively, a secondary channel may be allocated to the UHR STA.

Actually, when there is a UHR STA, the channel allocated to the UHR STAis a channel other than the channels (including the primary channel or the secondary channel) allocated to the first STA and/or the second STA.

For example, if the total channel bandwidth is 320 MHz, 80 MHz in the primary channel is allocated to the HE/EHT STA. The remaining includes a secondary channel of 80 MHz, and a secondary channel of 160 MHz, which are allocated to other STAs.

In a case that there is a second STA in the STA but there is no first STA in the STA, the AP may allocate the 80 MHz channel in the primary channel to the HE/EHT STA that supports the SST, i.e., the second STA.

In this way, the STA receives the first radio frame, where the first radio frame includes uplink bandwidth information for transmitting the first sub-PPDU of the uplink aggregated physical layer protocol data unit (A-PPDU) by the STA. In the UHR transmission, the AP preferentially allocates the primary channel to the first STA (if there is no first STA, the AP preferentially allocates the primary channel to the second STA), and allocates the secondary channel to the UHR STA. The STA determines, according to whether the STA itself is the first STA, the second STA, or the UHR STA, the channel allocated by the AP to the STA. Subsequently, different transmission protocols are configured for different channels, and the receiving device parses the sub-PPDU transmitted by each sub-channel according to different transmission protocols, to ensure backward compatibility and standardize the process of transmitting the uplink A-PPDU by the STAs supporting different protocols, so that the process is applicable to the UHR requirement.

According to embodiments of the present disclosure, there is provided a communication method. Optionally, the method may be applied to an STA, and the method may include the following steps.

In the process of establishing an individual target wake time (individual TWT), an uplink bandwidth, allocated by an access point (AP) device to the STA, for transmitting a sub-PPDU of the A-PPDU is received.

A first radio frame is received, where the first radio frame includes uplink bandwidth information for transmitting a first sub-PPDU of an uplink aggregated physical layer protocol data unit (A-PPDU) by the STA.

Among them, in a case that the STA includes a first STA or a second STA, the uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

In the process of establishing an individual TWT with the AP, the STA negotiates the bandwidth for transmitting the A-PPDU by the STA. For example, if the maximum bandwidth supported by the AP is 320MHz, and the maximum bandwidth supported by the first STA is 80MHz (where the bandwidth capability supported by the STA may be obtained by parsing the HE/EHT capabilities information element), the bandwidth for transmitting the sub-PPDU of the A-PPDU by the STA is carried in the TWT response frame replied by the AP, for example, the bandwidth may be 80MHz of the primary channel.

Optionally, in the embodiments of the present disclosure, in the process of establishing the individual target wake time (individual TWT), receiving the uplink bandwidth, allocated by the access point (AP) device to the STA, for transmitting the sub-PPDU of the A-PPDU, includes at least one of the following.

In case 1, the STA includes the first STA, and a primary channel is allocated for the first sub-PPDU of the first STA.

In case 2, the STA includes the second STA and the UHR STA, a primary channel is allocated for the first sub-PPDU of the second STA, and a secondary channel is allocated to the UHR STA. Alternatively, a secondary channel is allocated for the first sub-PPDU of the second STA, and a primary channel is allocated to the UHR STA.

In case 3, the STA only includes the UHR STA, and a primary channel or a secondary channel is allocated to the UHR STA.

In the case 1, in a case that the STA includes the first STA, the sub-PPDU configured by the AP to the first STA includes a primary channel. A secondary channel is configured to other STAs, such as a UHR STA or a second STA, for example, in the foregoing scenario (1) and scenario (2). For example, if the total channel bandwidth is 320 MHz, 80 MHz in the primary channel is allocated to the HE/EHT STA. The remaining includes a secondary channel of 80 MHz and a secondary channel of 160 MHz, which are allocated to other STAs. If there is a second STAin other STAs, reference may be made to the allocation manner in the following case 2.

When the STA includes only the first STA, a primary channel is allocated to the STA, and reference may be made to the foregoing scenario (4).

In the case 2, in a case that there is a second STA in the STA but there is no first STA in the STA, for example, in the foregoing scenario (3), the AP may allocate a primary channel to the second STA, and allocate a secondary channel to the UHR STA; alternatively, the AP may allocate a secondary channel for the first sub-PPDU of the second STA, and allocate a primary channel to the UHR STA.

In the case 3, the STA includes only a UHR STA, for example, in the foregoing scenario (5), and the AP allocates a primary channel or a secondary channel to the UHR STA.

In addition, for a UHR STA, it needs to have capability information for supporting the A-PPDU, which is specifically a reception capability and a transmission capability. The AP may allocate, in the process of establishing the individual TWT, a primary channel or a secondary channel to the UHR STA for performing transmission of the sub-PPDU of the A-PPDU. Alternatively, the AP may carry an individual TWT parameter set field in the TWT response frame, and identify the primary channel and the secondary channel through the TWT channel sub-field in the individual TWT parameter set field.

As a second example, the format of the individual TWT parameter set field refers to the foregoing Table 1, where the i-th bit in the TWT channel field indicates whether the channel corresponding to the i-th bit is a primary channel. For example, when the i-th bit is set to 1, it indicates that the channel corresponding to the i-th bit is a primary channel, and another channel that is set to 0 is a secondary channel.

Optionally, in the embodiments of the present disclosure, the first radio frame includes a trigger frame and a clear to send (CTS)-to-self frame. Receiving the first radio frame includes at least one of the following:
receiving the trigger frame in the bandwidth of the A-PPDU;
receiving the trigger frame in the bandwidth of a basic service set (BSS); or
receiving the CTS-to-self frame in the bandwidth of the A-PPDU.

Correspondingly, according to embodiments of the present disclosure, there is provided a communication method, which may include the following steps.

A trigger frame is received in the bandwidth of the A-PPDU, where the trigger frame includes uplink bandwidth information for transmitting a first sub-PPDU of an uplink aggregated physical layer protocol data unit (A-PPDU) by an STA.

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

Among them, the STA receives the trigger frame in the bandwidth of the A-PPDU, where the format of the trigger frame is a multi-user (MU)-PPDU. The trigger frame includes the STA ID of each STA and the uplink bandwidth information (the UL BW value) for sending the sub-PPDU (the second sub-PPDU) corresponding to the STA ID. The bandwidth information, for example, the value negotiated by the AP in the process of establishing the individual TWT with the STA, may be different for each STA. In addition, the CS (Carrier Sensing) bit of the trigger frame is set to 0.

In the embodiments of the present disclosure, in the UHR transmission, the AP preferentially allocates the primary channel to the first STA (if there is no first STA, the AP preferentially allocates the primary channel to the second STA), and allocates the secondary channel to the UHR STA. The STA determines, according to whether the STA itself is the first STA, the second STA, or the UHR STA, the channel allocated by the AP to the STA. Subsequently, different transmission protocols are configured for different channels, and the receiving device parses the sub-PPDU transmitted by each sub-channel according to different transmission protocols, to ensure backward compatibility and standardize the process of transmitting the uplink A-PPDU by the STAs supporting different protocols, so that the process is applicable to the UHR requirement.

According to embodiments of the present disclosure, there is provided a communication method, and the method may include the following steps.

A trigger frame is received in the bandwidth of a basic service set (BSS), where the trigger frame includes uplink bandwidth information for transmitting a first sub-PPDU of an uplink aggregated physical layer protocol data unit (A-PPDU) by the STA.

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

Among them, the STA receives the trigger frame in the bandwidth of the BSS, and the HE/EHT STA is able to parse the trigger frame. The AP sets the UL BW sub-domain in the Common Info domain of the trigger frame to the maximum bandwidth that the HE STA is able to parse, for example, 160 MHz. The Common Info domain further includes a User Info domain, and the User Info domain includes an association identifier (AID) and resource unit allocation (RU Allocation) information corresponding to the AID, where the RU Allocation information is, for example, the uplink bandwidth information for the first sub-PPDU negotiated by the AP in the process of establishing the individual TWT with the STA.

According to embodiments of the present disclosure, there is provided a communication method, and the method may include the following steps.

A CTS-to-self frame is received in the bandwidth of the A-PPDU, where the CTS-to-self frame includes uplink bandwidth information for transmitting the first sub-PPDU of the uplink aggregated physical layer protocol data unit (A-PPDU) by the STA; for example, the CTS-to-self frame includes the uplink bandwidth information for the first sub-PPDU negotiated by the AP in the process of establishing the individual TWT with the STA.

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

In the embodiments of the present disclosure, the STA receives the first radio frame, where the first radio frame includes uplink bandwidth information for transmitting the first sub-PPDU of the uplink aggregated physical layer protocol data unit (A-PPDU) by the STA. In the UHR transmission, the AP preferentially allocates the primary channel to the first STA (if there is no first STA, the AP preferentially allocates the primary channel to the second STA), and allocates the secondary channel to the UHR STA. The STA determines, according to whether the STA itself is the first STA, the second STA, or the UHR STA, the channel allocated by the AP to the STA. Subsequently, different transmission protocols are configured for different channels, and the receiving device parses the sub-PPDU transmitted by each sub-channel according to different transmission protocols, to ensure backward compatibility and standardize the process of transmitting the uplink A-PPDU by the STAs supporting different protocols, so that the process is applicable to the UHR requirement.

Referring to FIG. 5, based on the same principle as the method provided in the embodiments of the present disclosure, according to embodiments of the present disclosure, there is further provided an electronic device, where the electronic device is an access point (AP) device, and the electronic device includes a sending module 501.

The sending module 501 is configured to send a first radio frame, where the first radio frame includes uplink bandwidth information for transmitting a first sub-PPDU of an uplink aggregated physical layer protocol data unit (A-PPDU) by a station (STA).

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

In an optional embodiment, the electronic device further includes:
a TWT establishment module, configured to allocate, in a process of establishing an individual target wake time (individual TWT), an uplink bandwidth to the STA for transmitting a sub-PPDU of the A-PPDU.

In an optional embodiment, the TWT establishment module is configured to perform at least one of the following:
allocating a primary channel for the first sub-PPDU of the first STA, where the STA includes the first STA; or
allocating a primary channel or a secondary channel to a UHR STA, where the STA only includes the UHR STA.

In an optional embodiment, the sending module 501 is configured to perform at least one of the following:
sending a trigger frame in the bandwidth of the A-PPDU;
sending a trigger frame in the bandwidth of a basic service set (BSS); or
sending a CTS-to-self frame in the bandwidth of the A-PPDU.

In an optional embodiment, sending the trigger frame in the bandwidth of the A-PPDU includes:
sending the trigger frame in the bandwidth of the A-PPDU, where the trigger frame is a multi-user physical layer protocol data unit (MU-PPDU), and a second sub-PPDU of the MU-PPDU includes the uplink bandwidth information for the STA corresponding to the second sub-PPDU.

In an optional embodiment, sending the trigger frame in the bandwidth of the basic service set (BSS) includes:
sending the trigger frame in the bandwidth of the BSS, where an uplink bandwidth (UL BW) sub-domain in a common information (Common Info) domain of the trigger frame is set to a maximum bandwidth supported by the first STA for parsing.

The trigger frame further includes a user information (User Info) domain, and the User Info domain includes an association identifier (AID) of the STA and resource unit allocation (RU allocation) information.

According to embodiments of the present disclosure, there is further provided a communication apparatus, applied in an access point (AP) device, and the apparatus includes a radio frame sending module.

The radio frame sending module is configured to send a first radio frame, where the first radio frame includes uplink bandwidth information for transmitting a first sub-PPDU of an uplink aggregated physical layer protocol data unit (A-PPDU) by a station (STA).

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

The apparatus further includes other modules of the electronic device in the foregoing embodiments, and details are not described here again.

Referring to FIG. 6, based on the same principle as the method provided in the embodiments of the present disclosure, according to embodiments of the present disclosure, there is further provided an electronic device, where the electronic device is a station, and the electronic device includes a receiving module 601/

The receiving module 601 is configured to receive a first radio frame, where the first radio frame includes uplink bandwidth information for transmitting a first sub-PPDU of an uplink aggregated physical layer protocol data unit (A-PPDU) by the STA.

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

In an optional embodiment, the electronic device further includes:
an establishment module, configured to receive, in a process of establishing an individual target wake time (individual TWT), an uplink bandwidth allocated by an access point (AP) device to the STA for transmitting a sub-PPDU of the A-PPDU.

In an optional embodiment, the establishing module is configured to perform at least one of the following:
allocating a primary channel for the first sub-PPDU of the first STA, where the STA includes the first STA; or
allocating a primary channel or a secondary channel to a UHR STA, where the STA only includes the UHR STA.

In an optional embodiment, the receiving module 601 is configured to perform at least one of the following:
receiving a trigger frame in a bandwidth of the A-PPDU;
receiving a trigger frame in a bandwidth of a basic service set (BSS); or
receiving a CTS-to-self frame in a bandwidth of the A-PPDU.

In an optional embodiment, receiving the trigger frame in the bandwidth of the A-PPDU includes:
receiving the trigger frame in the bandwidth of the A-PPDU, where the trigger frame is a multi-user physical layer protocol data unit (MU-PPDU), and a second sub-PPDU of the MU-PPDU includes the uplink bandwidth information for the STA corresponding to the second sub-PPDU.

In an optional embodiment, receiving the trigger frame in the bandwidth of the basic service set (BSS) includes:
receiving the trigger frame in the bandwidth of the BSS, where an uplink bandwidth (UL BW) sub-domain in a common information (Common Info) domain of the trigger frame is set to a maximum bandwidth supported by the first STA for parsing.

The trigger frame further includes a user information (User Info) domain, and the User Info domain includes an association identifier (AID) of the STA and resource unit allocation (RU allocation) information.

In an optional embodiment, receiving the CTS-to-self frame in the bandwidth of the A-PPDU includes:
receiving the CTS-to-self frame in the bandwidth of the A-PPDU, where the CTS-to-self frame includes duration information for the A-PPDU, and a UL BW sub-domain in a Common Info domain of the CTS-to-self frame is set to a maximum bandwidth supported by the first STA for parsing.

According to embodiments of the present disclosure, there is further provided a communication apparatus, applied in a station, and the apparatus includes a receiving module.

The receiving module is configured to receive a first radio frame, where the first radio frame includes uplink bandwidth information for transmitting a first sub-PPDU of an uplink aggregated physical layer protocol data unit (A-PPDU) by the STA.

Among them, in a case that the STA includes a first STA or a second STA, an uplink bandwidth for transmitting the first sub-PPDU by the first STA or the second STA includes a primary channel. The first STA is a high efficiency (HE)/enhancements for extremely high throughput (EHT) STA that does not support the subchannel selective transmission (SST), and the second STA is an HE/EHT STA that supports the SST.

The apparatus further includes other modules of the electronic device in the foregoing embodiments, and details are not described here again.

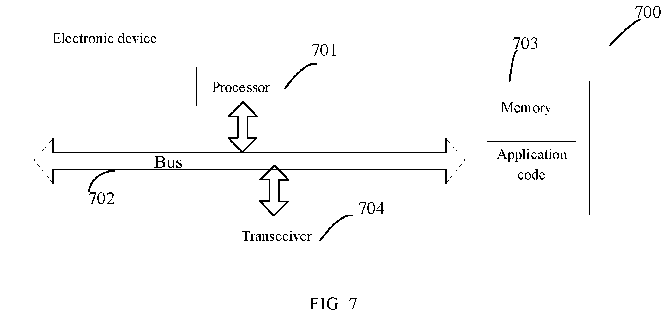

In an optional embodiment, according to embodiments of the present disclosure, there is further provided an electronic device, as shown in FIG. 7. The electronic device 700 shown in FIG. 7 may be a server, including a processor 701 and a memory 703, where the processor 701 is connected to the memory 703. For example, the processor 701 is connected to the memory 703 by using the bus 702. Optionally, the electronic device 700 may further include a transceiver 704. It should be noted that the number of the transceiver 704 in actual application is not limited to one, and the structure of the electronic device 700 does not constitute a limitation on the embodiments of the present disclosure.

The processor 701 may be a central processing unit (CPU), a general-purpose processing unit, a digital signal processor (DSP), an application specific integrated circuit (ASIC), a field programmable gate array (FPGA) or another programmable logic device, a transistor logic device, a hardware component, or any combination of them. The processor may implement or execute various example logical blocks, modules, and circuits described with reference to content disclosed in the present disclosure. Alternatively, the processor 701 may be a combination for implementing a computing function, for example, a combination of one or more microprocessors, or a combination of a DSP and a microprocessor.

The bus 702 may include a path for transmitting information between the foregoing components. The bus 702 may be a peripheral component interconnect (PCI) bus, an extended industry standard architecture (EISA) bus, or the like. The bus 702 may be classified into an address bus, a data bus, a control bus, or the like. For ease of representation, only one thick line is used to represent the bus in FIG. 7, but this does not mean that there is only one bus or one type of bus.

The memory 703 may be a read only memory (ROM) or other types of static storage devices that can store static information and instructions, a random access memory (RAM) or other types of dynamic storage devices that can store information and instructions. The memory 703 may also be an electrically erasable programmable read only memory (EEPROM), a compact disc read only memory (CD-ROM) or other optical disc storages, an optical disc storage (including compressed optical discs, laser discs, optical discs, digital versatile discs, blue ray discs, etc.), a magnetic disk storage medium or other magnetic storage devices, or any other medium that can be used to carry or store desired program code in the form of instructions or data structures and can be accessed by a computer, but is not limited to this.

The memory 703 is configured to store application code for executing the solution of the present disclosure, and the processor 701 controls the execution. The processor 701 is configured to execute the application code stored in the memory 703, to implement the content shown in the foregoing method embodiments.

Among them, the electronic device includes, but is not limited to, a mobile terminal such as a mobile phone, a notebook computer, a digital broadcast receiver, a personal digital assistant (PDA), a tablet computer (PAD), a portable multimedia player (PMP), a vehicle-mounted terminal (for example, a vehicle-mounted navigation terminal), and a fixed terminal such as a digital TV, a desktop computer, or the like. The electronic device shown in FIG. 7 is merely an example, and should not bring any limitation to the function and the use scope of the embodiments of the present disclosure.

The server provided by the present disclosure may be an independent physical server, or may be a server cluster or a distributed system composed of a plurality of physical servers, or may be a cloud server providing basic cloud computing services such as cloud services, cloud databases, cloud computing, cloud functions, cloud storage, network services, cloud communication, middleware services, domain name services, security services, CDN, and big data and artificial intelligence platforms. The terminal may be a smart phone, a tablet computer, a notebook computer, a desktop computer, a smart speaker, a smart watch, or the like, but is not limited to this. The terminal and the server may be directly or indirectly connected in a wired or wireless communication manner, which is not limited in the present disclosure.

According to embodiments of the present disclosure, there is provided a computer-readable storage medium, where a computer program is stored on the computer-readable storage medium. When the computer program runs on a computer, the computer is able to execute corresponding content in the foregoing method embodiments.

It should be understood that although the steps in the flowcharts of the drawings are sequentially displayed according to the indication of the arrows, these steps are not necessarily executed in sequence according to the order indicated by the arrows. Unless explicitly stated in the context, the execution of these steps is not strictly limited in sequence, and these steps may be executed in other orders. Moreover, at least some of the steps in the flowchart of the drawings may include a plurality of sub-steps or a plurality of stages. These sub-steps or stages are not necessarily executed and completed at the same time, but may be executed at different moments. The execution of these sub-steps or stages is not necessarily performed in sequence, but these sub-steps or stages may be executed in turn or alternately with at least a part of other steps or sub-steps or stages of other steps.

It should be noted that the computer-readable medium described in the present disclosure may be a computer-readable signal medium or a computer-readable storage medium or any combination of the foregoing. The computer-readable storage medium may be, for example, but not limited to, an electronic, magnetic, optical, electromagnetic, infrared, or semiconductor system, apparatus, or device, or any combination of the foregoing. A more specific example of the computer-readable storage medium may include, but is not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program, and the program may be used by or used in combination with an instruction execution system, apparatus, or device. In the present disclosure, the computer-readable signal medium may include a data signal propagated in a baseband or as part of a carrier, in which computer-readable program code is carried. The propagated data signal may take a variety of forms, including but not limited to an electromagnetic signal, an optical signal, or any suitable combination of the foregoing. The computer-readable signal medium may also be any computer-readable medium other than a computer-readable storage medium, and the computer-readable signal medium may send, propagate, or transmit a program for use by or in connection with an instruction execution system, apparatus, or device. The program code included in the computer-readable medium may be transmitted by using any suitable medium, including but not limited to, an electric wire, an optical cable, a radio frequency (RF), or any suitable combination of the foregoing, etc.

The computer-readable medium may be included in the electronic device, or may exist alone without being assembled into the electronic device.

The computer-readable medium carries one or more programs, and when the one or more programs are executed by the electronic device, the electronic device is enabled to perform the method shown in the foregoing embodiments.

According to an aspect of the present disclosure, there is provided a computer program product or a computer program. The computer program product or the computer program includes a computer instruction, and the computer instruction is stored in a computer-readable storage medium. A processor of the computer device reads the computer instruction from the computer-readable storage medium, and the processor executes the computer instruction, causing the computer device to perform the method provided in the foregoing optional implementations.

Computer program code for performing the operations of the present disclosure may be written in one or more programming languages or a combination of the foregoing. The programming language includes object-oriented programming languages, such as Java, Smalltalk, C++, and further includes conventional procedural programming languages, such as the "C" language or similar programming languages. The program code may be executed entirely on the user computer, partially on the user computer, as a stand-alone software package, partially on the user computer and partially on a remote computer, or entirely on a remote computer or a server. In the case of involving a remote computer, the remote computer may be connected to the user computer through any kind of network, including a local area network (LAN) or a wide area network (WAN), or may be connected to an external computer (e.g. being connected through the Internet using an Internet service provider).

The flowchart and block diagrams in the drawings illustrate the architecture, function, and operation of possible implementations of systems, methods, and computer program products according to various embodiments of the present disclosure. In this regard, each block in the flowchart or block diagrams may represent a module, a program segment, or a portion of code, which includes one or more executable instructions for implementing the specified logical function. It should also be noted that, in some alternative implementations, the function noted in the block may occur in an order different from the order noted in the drawings. For example, two blocks shown in succession may, in fact, be executed substantially concurrently, or the blocks may sometimes be executed in a reverse order, which depends upon the function involved. It will also be noted that each block in the block diagrams and/or flowchart, and combinations of blocks in the block diagrams and/or flowchart, may be implemented by using special purpose hardware-based systems that perform the specified functions or operations, or may be implemented by using combinations of special purpose hardware and computer instructions.

The modules involved in the description of the embodiments of the present disclosure may be implemented by software, or may be implemented by hardware, where the name of the module does not constitute a limitation on the module itself in some cases. For example, the module A may also be described as " module A for performing operation B".

The above description is only a description of the preferred embodiments of the present disclosure and the applied technical principles. It should be understood by those skilled in the art that the disclosed scope of the present disclosure is not limited to the technical solution formed by the specific combination of the above technical features, and should also cover other technical solutions formed by any combination of the above technical features or their equivalent features without departing from the concept disclosed above, such as the technical solutions formed by replacing the above features with (but not limited to) technical features with similar functions disclosed in the present disclosure.

## Claims

1. A communication method, applied to an access point, AP, device, wherein the method comprises:
sending a first radio frame, wherein the first radio frame comprises uplink bandwidth information for transmitting a first sub-PPDU of an uplink aggregated physical layer protocol data unit, A-PPDU, by a station, STA;
wherein, in a case that the STA comprises a first STA or a second STA, an uplink bandwidth for transmitting the first sub-PPDU by the first STA or the second STA comprises a primary channel, the first STA is a high efficiency, HE/enhancements for extremely high throughput, EHT, STA that does not support a subchannel selective transmission, SST, and the second STA is an HE/EHT STA that supports the SST.

2. The communication method according to claim 1, wherein before sending the first radio frame, the method further comprises:
allocating, in a process of establishing an individual target wake time, individual TWT, an uplink bandwidth to the STA for transmitting a sub-PPDU of the A-PPDU.

3. The communication method according to claim 2, wherein allocating, in the process of establishing the individual target wake time, individual TWT, the uplink bandwidth to the STA for transmitting the sub-PPDU of the A-PPDU comprises at least one of:
allocating a primary channel for the first sub-PPDU of the first STA, wherein the STA comprises the first STA; or
allocating a primary channel or a secondary channel to a UHR STA, wherein the STA only comprises the UHR STA.

4. The communication method according to claim 1 or 2, wherein sending the first radio frame comprises at least one of:
sending a trigger frame in a bandwidth of the A-PPDU;
sending a trigger frame in a bandwidth of a basic service set, BBS; or
sending a clear to send, CTS-to-self frame in a bandwidth of the A-PPDU.

5. The communication method according to claim 4, wherein sending the trigger frame in the bandwidth of the A-PPDU comprises:
sending the trigger frame in the bandwidth of the A-PPDU, wherein the trigger frame is a multi-user physical layer protocol data unit, MU-PPDU, and a second sub-PPDU of the MU-PPDU comprises the uplink bandwidth information for an STA corresponding to the second sub-PPDU.

6. The communication method according to claim 4, wherein sending the trigger frame in the bandwidth of the basic service set, BBS, comprises:
sending the trigger frame in the bandwidth of the BSS, wherein an uplink bandwidth, UL BW, sub-domain in a common information, Common Info, domain of the trigger frame is set to a maximum bandwidth supported by the first STA for parsing;
wherein the trigger frame further comprises a user information, User Info, domain, and the User Info domain comprises an association identifier, AID, of the STA and resource unit allocation, RU allocation, information.

7. The communication method according to claim 4, wherein sending the CTS-to-self frame in the bandwidth of the A-PPDU comprises:
sending the CTS-to-self frame in the bandwidth of the A-PPDU, wherein the CTS-to-self frame comprises duration information for the A-PPDU, and a UL BW sub-domain in a Common Info domain of the CTS-to-self frame is set to a maximum bandwidth supported by the first STA for parsing.

8. A communication method, applied to a station, STA, wherein the method comprises:
receiving a first radio frame, wherein the first radio frame comprises uplink bandwidth information for transmitting a first sub-PPDU of an uplink aggregated physical layer protocol data unit, A-PPDU, by the STA;
wherein, in a case that the STA comprises a first STA or a second STA, an uplink bandwidth for transmitting the first sub-PPDU by the first STA or the second STA comprises a primary channel, the first STA is a high efficiency, HE/enhancements for extremely high throughput, EHT, STA that does not support a subchannel selective transmission, SST, and the second STA is an HE/EHT STA that supports the SST.

9. The communication method according to claim 8, wherein before the receiving the first radio frame, the method further comprises:
receiving, in a process of establishing an individual target wake time, individual TWT, an uplink bandwidth allocated by an access point, AP, device to the STA for transmitting a sub-PPDU of the A-PPDU.

10. The communication method according to claim 9, wherein receiving, in the process of establishing the individual target wake time, individual TWT, the uplink bandwidth allocated by the access point, AP, device to the STA for transmitting the sub-PPDU of the A-PPDU comprises at least one of:
allocating a primary channel for the first sub-PPDU of the first STA, wherein the STA comprises the first STA; or
allocating a primary channel or a secondary channel to a UHR STA, wherein the STA only comprises the UHR STA.

11. The communication method according to claim 8 or 9, wherein receiving the first radio frame comprises at least one of:
receiving a trigger frame in a bandwidth of the A-PPDU;
receiving a trigger frame in a bandwidth of a basic service set, BBS; or
receiving a CTS-to-self frame in a bandwidth of the A-PPDU.

12. The communication method according to claim 11, wherein receiving the trigger frame in the bandwidth of the A-PPDU comprises:
receiving the trigger frame in the bandwidth of the A-PPDU, wherein the trigger frame is a multi-user physical layer protocol data unit, MU-PPDU, and a second sub-PPDU of the MU-PPDU comprises the uplink bandwidth information for an STA corresponding to the second sub-PPDU.

13. The communication method according to claim 12, wherein receiving the trigger frame in the bandwidth of the basic service set, BBS, comprises:
receiving the trigger frame in the bandwidth of the BSS, wherein an uplink bandwidth, UL BW, sub-domain in a common information, Common Info, domain of the trigger frame is set to a maximum bandwidth supported by the first STA for parsing;
wherein the trigger frame further comprises a user information, User Info, domain, and the User Info domain comprises an association identifier, AID, of the STA and resource unit allocation, RU allocation, information.

14. The communication method according to claim 12, wherein receiving the CTS-to-self frame in the bandwidth of the A-PPDU comprises:
receiving the CTS-to-self frame in the bandwidth of the A-PPDU, wherein the CTS-to-self frame comprises duration information for the A-PPDU, and a UL BW sub-domain in a Common Info domain of the CTS-to-self frame is set to a maximum bandwidth supported by the first STA for parsing.

15. An electronic device, wherein the electronic device is an access point, AP, device, and the electronic device comprises:
a sending module, configured to send a first radio frame, wherein the first radio frame comprises uplink bandwidth information for transmitting a first sub-PPDU of an uplink aggregated physical layer protocol data unit, A-PPDU, by a station, STA;
wherein, in a case that the STA comprises a first STA or a second STA, an uplink bandwidth for transmitting the first sub-PPDU by the first STA or the second STA comprises a primary channel, the first STA is a high efficiency, HE/enhancements for extremely high throughput, EHT, STA that does not support a subchannel selective transmission, SST, and the second STA is an HE/EHT STA that supports the SST.

16. An electronic device, wherein the electronic device is a station, STA, and the electronic device comprises:
a receiving module, configured to receive a first radio frame, wherein the first radio frame comprises uplink bandwidth information for transmitting a first sub-PPDU of an uplink aggregated physical layer protocol data unit, A-PPDU, by the STA;
wherein, in a case that the STA comprises a first STA or a second STA, an uplink bandwidth for transmitting the first sub-PPDU by the first STA or the second STA comprises a primary channel, the first STA is a high efficiency, HE/enhancements for extremely high throughput, EHT, STA that does not support a subchannel selective transmission, SST, and the second STA is an HE/EHT STA that supports the SST.

17. An electronic device, comprising a memory, a processor, and a computer program stored in the memory and executable on the processor, wherein when the program is executed by the processor, the method according to any one of claims 1 to 7 is implemented or the method according to any one of claims 8 to 14 is implemented.

18. A computer-readable storage medium, wherein a computer program is stored on the computer-readable storage medium, and when the computer program is executed by a processor, the method according to any one of claims 1 to 7 is implemented or the method according to any one of claims 8 to 14 is implemented.
